# EUROPÄISCHE PATENTSCHRIFT

(11) **EP 1 202 881 B1**
(45) Veröffentlichungstag und Bekanntmachung des Hinweises auf die Patenterteilung: **06.10.2004**
(21) Anmeldenummer: 00949243.0
(22) Anmeldetag: 03.07.2000
(51) Int. Cl.: B60R 22/46, B60R 21/18

(54) **RÜCKHALTESYSTEM MIT WENIGSTENS EINER GURTSTRAMMEREINRICHTUNG**
RESTRAINT SYSTEM WITH AT LEAST ONE BELT TIGHTENER SYSTEM
DISPOSITIF DE RETENUE COMPORTANT AU MOINS UN SYSTEME TENDEUR DE CEINTURE

(30) Priorität: 29.07.1999 DE 19935737
(43) Veröffentlichungstag der Anmeldung: 08.05.2002
(73) Patentinhaber: Volkswagen Aktiengesellschaft, 38436 Wolfsburg (DE)
(72) Erfinder: WOHLLEBE, Thomas, D-38110 Braunschweig (DE); SINNHUBER, Ruprecht, D-38518 Gifhorn (DE)
(74) Vertreter: Liebl, Thomas, Dipl.-Ing.
(86) Internationale Anmeldenummer: PCT/EP2000/006189
(87) Internationale Veröffentlichungsnummer: WO 2001/008939

(56) Entgegenhaltungen:
- DE-A- 19 805 063
- FR-A- 2 093 578
- US-A- 5 911 433

## Beschreibung

Die Erfindung betrifft ein Rückhaltesystem für ein Fahrzeug mit wenigstens einer Gurtstrammereinrichtung für einen Fahrzeuginsassen, bei dem der Sicherheitsgurt durch eine pyrotechnische Treibladung gestrafft wird.

Bei Rückhaltesystemen mit wenigstens einem Rückhaltemittel für Fahrzeuginsassen, die mit einer pyrotechnischen Treibladung versehen sind, die in einem Crashfall aktiviert wird, tritt nach der Befüllung des Rückhaltemittels durch aus diesem ausströmendes Abbrandgas eine Schadstoffbelastung des/ der Fahrzeuginsassen in der Fahrgastzelle auf. Zur Verhinderung dieser unerwünschten Belastung ist es bekanntgeworden, die Abbrandgase durch ein Gebläse aus der Fahrgastzelle zu entfernen (DE 39 22 364 A1) oder diese einer Gassammeleinrichtung zuzuführen, wenn das Rückhaltemittel (Airbag) wieder in den Erschlaffungszustand übergeht. Das in den Airbag eingebrachte Gasvolumen entweicht somit nicht mehr in die Fahrgastzelle, sondern wird direkt aus dem Fahrzeug heraus in die Fahrzeugumgebung abgeleitet oder für eine vorbestimmbare Zeitdauer in einem Speicher, beispielsweise einem zweiten Airbag, abgeschottet vom Fahrzeuginsassen aufgefangen (DE 198 05 063 A1). Dieses vorübergehend gespeicherte Gasvolumen kann bei sog. Sekundäraufprallereignissen, beispielsweise während eines Überschlages oder einer Nachfolgekollision während eines Auffahrunfalles, für eine erneute Beladung des Airbags genutzt werden. Aus der gattungsbildenden DE 198 05 063 A1 ist es ebenfalls bekannt, daß auch Gurtstrammereinrichtungen mit einem solchen Speicher versehen werden können. Auch ist es bekannt, diesen Speicher als zusätzliches Polster zu nutzen und die an sich für die Strammerfunktion bestimmte Treibladung hinsichtlich ihres Gaserzeugungsvolumens so auszulegen, daß der Speicher gleichzeitig mit der Betätigung des Gurtstrammers aufgeblasen und als ein die relativ harten Gurtschlösser gegenüber dem Fahrzeuginsassen abschirmender Speicher-Airbag oder auch als Speicher-Beckenairbag ausgebildet ist. Dabei weist die Strammereinrichtung ein Gehäuse und ein in diesem angeordnetes und durch die Treibladung verstellbares und mit wenigstens einem der Gurtanlenkpunkte bzw. -Umlenkpunkte wirkverbundenes Stellglied auf, wobei das Gehäuse mit dem Speicher-Airbag strömungsverbunden ist. Im Auslösefall legt sich der Speicher-Airbag um die Gurtstrammereinrichtung und schirmt diese gegenüber dem Fahrzeuginnern ab. Damit der Airbag als Aufprallschutz in der eben geschilderten Art und Weise aufgeblasen werden kann, muss das Gehäuse in einem dem Fahrzeuginsassen zugewandten Bereich aufreißen, um den Airbagaustritt zu ermöglichen.

Nachteilig bei diesem Aufbau ist jedoch, dass hier der Airbag direkt am Zylinder als Bestandteil der pyrotechnischen Stelleinrichtung angeschlossen ist. Eine derartige Anschlusstechnik ist sehr aufwendig und schwierig beherrschbar und damit teuer. Die pyrotechnische Stelleinrichtungen werden den Fahrzeugherstellern von den Zulieferern zusammen mit der erforderlichen Anschlusstechnik zugeliefert. Für unterschiedliche Einbausituationen, z. B. im Falle unterschiedlicher Fahrzeugtypen und/oder unterschiedlicher Einbauorte ect., ist regelmäßig eine andere Auslegung bzw. Dimensionierung der pyrotechnischen Stelleinrichtung und damit eine Anpassung derselben an diese unterschiedlichen Einbausituationen erforderlich. Aufgrund dieses Erfordernisses der Anpassung der pyrotechnischen Stelleinrichtung ist regelmäßig jedes Mal auch die Anschlusstechnik am Zylinder entsprechend anzupassen, was wiederum zeit- und arbeitsintensiv und damit auch kostenintensiv ist. Hier sind somit insgesamt eine Vielzahl von Bauteilen anzupassen, was stets zulieferseitig erfolgt, sodass derartige Zuliefer-Bauteile für den Fahrzeughersteller sehr kostenintensiv in der Anschaffung sind.

Ein ähnlicher Aufbau mit den eben genannten Nachteilen ist auch aus der US-A-5,911,433 bekannt, bei der bei Zündung einer pyrotechnischen Ladung ein Kolben einer eine Stelleinrichtung einer Gurtstrammereinrichtung bildenden Zylinder-Kolben-Einheit im Zylinder in Richtung auf eine Gasquelle zubewegt wird und dort eine Membran der Gasquelle durchstößt zur Freigabe von Füllgas für einen im Kopfstützenbereich angeordneten Airbag. Der pyrotechnische Treibsatz dient hier somit in der Art eines Schalters lediglich zur Freisetzung des eigentlichen Gases zum Aufblasen des Kopfstützen-Airbags. Im Bereich der im Zylinder aufgenommenen Gasquelle ist hierfür eine Schlauchleitung direkt an den Zylinder und damit an der Stelleinrichtung angeschlossen, um sicher zu stellen, dass das aus der Gasquelle im Zylinder freigesetzte Gas über die Schlauchleitung in den Airbag eingeblasen werden kann. Ein derartiger Aufbau ist insgesamt gesehen relativ kompliziert und daher wenig praktikabel.

Des weiteren ist aus der DE 195 45 795 C1 eine Gurtstrammereinrichtung bekannt geworden, bei der der Gasgenerator mit einer diesen einschließenden Gasgeneratorhülse in der Gasgeneratoraufnahme der Antriebsvorrichtung für den Gurtstrammer fixiert ist. Dabei ist die Gasgeneratoraufnahme mit einer in ihre Wandung eingebrachten Öffnung versehen, die in Verbindung mit der Gasgeneratorhülse bei Überschreiten eines vorbestimmten Gasdruckes, bei dem die Hülsenwandung in die Öffnung hineingedrückt wird und birst, als Überdruckventil dient. Die Einrichtung dient der Erhöhung der Sicherheit der Gurtstrammereinrichtung durch eine Verhinderung ihrer Zerstörung bei Auftreten eines Überdruckes.

Bei der beschriebenen Gurtstrammereinrichtung werden die bei deren Aktivierung freigesetzten Gase in vorteilhafter Weise in einem Speicherairbag vorübergehend aufgefangen, wobei der Speicherairbag als zusätzliches Polster dienen kann.

Es ist daher Aufgabe der vorliegenden Erfindung, ein Rückhaltesystem mit wenigstens einer Gurtstrammereinrichtung zu schaffen, das für den Fahrzeughersteller preiswert in der Anschaffung ist und insbesondere auch auf einfache und flexible Weise in unterschiedliche Einbausituationen anpassbar ist.

Diese Aufgabe wird gelöst mit den Merkmalen des Patentanspruchs 1.

Gemäß dem Patentanspruch 1 ist die durch eine pyrotechnische Treibladung betätigbare Stelleinrichtung der Gurtstrammereinrichtung in einem gasdichten Behälter aus einem gasundurchlässigen, im wesentlichen unelastischen und druckfesten Material aufgenommen, in. dem das im aktivierten Zustand der Gurtstrammereinrichtung freigesetzte Treibgas zur Aktivierung von wenigstens einem zusätzlichen aufblasbaren und mit dem gasdichten Behälter strömungsverbundenen Rückhaltemittel nutzbar ist dergestalt, dass die Treibgase zum Aufblasen des Rückhaltemittels vom gasdichten Behälter aus in dieses einblasbar sind.

Vorteilhaft wird somit mit einem derartigen Aufbau das bei der Aktivierung der Treibladung für die Stelleinrichtung freigesetzte schadstoffhaltige Gas vom Fahrgastinnenraum ferngehalten und zugleich das überschüssige, energiebeladene Gasvolumen zur Aktivierung wenigstens eines zusätzlichen Rückhaltemittels in insassensicherheitserhöhender Weise genutzt. Das freigesetzte Treibgas wird dabei gemäß der erfindungsgemäßen Lösung zunächst außerhalb der Stelleinrichtung in einem gasdichten Behälter aufgefangen und dann durch den Anschluss des Rückhaltemittels an den gasdichten Behälter von diesem aus in das Rückhaltemittel eingeblasen. Mit einem derartigen Aufbau ist eine Anpassung an eine Vielzahl unterschiedlicher Einbausituationen auf sehr einfache und preiswerte Weise möglich, da bei einer derartigen Anpassung insbesondere im Hinblick auf die Anschlusstechnik keine Veränderungen mehr unmittelbar an der pyrotechnischen Stelleinrichtung selbst vorgenommen werden müssen, sondern nur noch der Behälter entsprechend anzupassen ist, was auf einfache Weise fahrzeugherstellerseitig durchzuführen ist. Die pyrotechnische Stelleinrichtungen dagegen können als Standardbauteile in preiswerter Weise ohne komplizierte Anschlusstechnik von den Zulieferfirmen bezogen werden.

Der Behälter ist vorzugsweise aus Metall oder einem engmaschig vernetzten Kunststoff, gebildet, der die Stelleinrichtung im Abstand umgibt und einen Hohlraum mit dieser ausbildet, wobei der Hohlraum über eine an einer Behälteröffnung angeschlossene Leitung mit dem Rückhaitemittel verbunden ist

Für die Anordnung eines Gurtstrammers sind alle möglichen Gurtanbindungspunkte - Aufrollautomat, Gurtschloß und Endbeschlag - geeignet. Es können auch mehrere Gurtstrammer für einen Sicherheitsgurt vorgesehen sein. Vorzugsweise sind die an die Gurtstrammereinrichtung angeschlossenen Rückhaltemittel ein aufblasbarer Schulterund/ oder Beckengurt oder ein am jeweiligen Fahrersitz angeordnetes Rückhaltemittel, wie ein Sitzrampenairbag und/ oder aufblasbare Sitz- und Lehnenwangen oder eine aufblasbare Kopfstütze oder ein an einer Kopfstütze angeordneter Kopfairbag, wobei diese Rückhaltemittel auf einfache Weise mit dem Behälter verbindbar sind, ohne daß eine Sitzverstellmöglichkeit berücksichtigt zu werden braucht.

Bezüglich der Gurtstrammeranordnung oder -anordnungen und der mit dieser/ diesen strömungsverbundenen Rückhaltemittel sind Kombinationen möglich.

Die Erfindung wird nachstehend anhand einer Reihe von Ausführungsbeispielen erläutert. Die zugehörigen Zeichnungen zeigen schematisch Rückhaltesysteme mit einem Gurtstrammer und:
- Fig. 1:: mit einem aufblasbaren Beckengurt,
- Fig. 2:: mit einem aufblasbaren Becken- und Schultergurt,
- Fig. 3:: mit einer aufblasbaren Kopfstütze,
- Fig. 4:: mit einem Kopfstützenairbag,
- Fig. 5:: mit aufblasbarem Becken- und Schultergurt in alternativer Ausführung,
- Fig. 6:: mit einer aufblasbaren Kopfstütze in alternativer Ausführung,
- Fig. 7:: mit einem Kopfstützenairbag in alternativer Ausführung,
- Fig. 8:: mit einem Sitzrampenairbag,
- Fig. 9:: mit aufblasbarer Sitz- und Lehnenwange,
- Fig. 10:: mit einem zweiten Gurtstrammer und einem aufblasbaren Schulter- und Beckengurt und
- Fig. 11:: mit einem zweiten Gurtstrammer und einem aufblasbaren Beckengurt und einer aufblasbaren Kopfstütze.

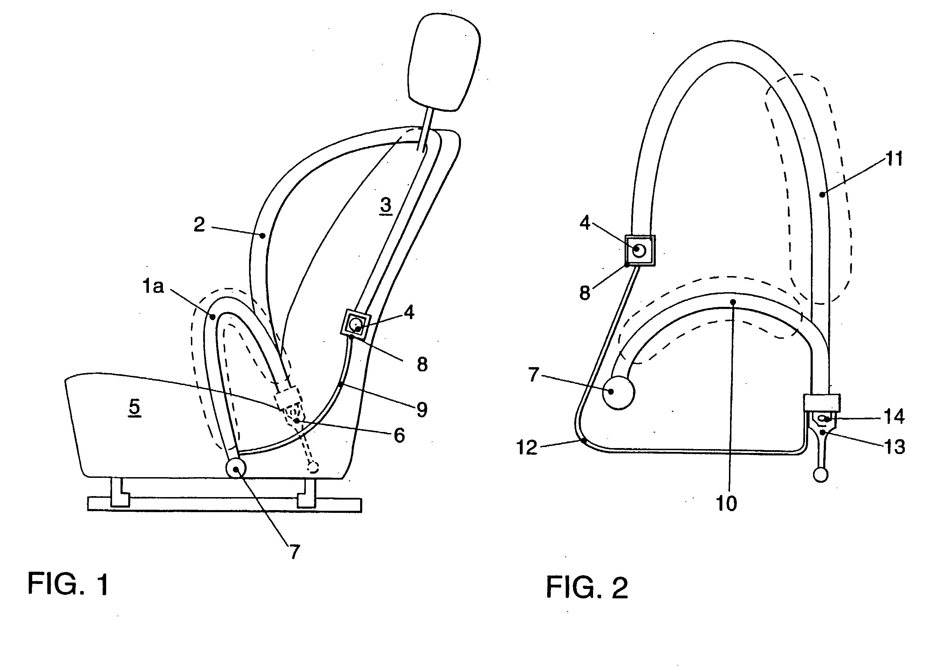

Fig. 1 zeigt einen Gurtintegralsitz mit einem an diesem angeordneten und aus einem aufblasbaren Beckengurt 1 a und einem Schultergurt 2 gebildeten Sicherheitsgurt, wobei der Schultergurt 2 in der Sitzlehne 3 mit einem Gurt-Aufrollautomaten mit einem Gurtstrammer 4 aufgerollt und zu einem am Sitzgestell 5 angeordneten Gurtschloß 6 geführt und der Beckengurt 1a von diesem (6) zu einem am Sitzgestell 5 auf der dem Gurtschloß 6 abgewandten Seite angeordneten Gurtendbeschlag 7 geführt ist. Der Aufrollautomat mit dem Gurtstrammer 4 ist in einer Metallkapsel 8 als gasdichter Behälter angeordnet, an der ein mit dem Beckengurt 1a am Gurtendbeschlag verbundener Schlauch 9 angeschlossen ist. Bei einer Aktivierung eines in bekannter Weise mit dem Gurtstrammer 4 gekoppelten pyrotechnischen Treibsatzes wird der Beckengurt 1a aufgeblasen und legt sich im Beckenbereich an den Fahrzeuginsassen an, so daß dieser sowohl durch den Schultergurt 2 als auch den Beckengurt 1 a bei einer starken Verzögerung am Fahrzeugsitz zurückgehalten wird.

In Fig. 2 ist ein Sicherheitsgurt für einen Gurtintegralsitz mit einem aufblasbaren Beckengurt 10 und einem aufblasbaren Schultergurt 11 dargestellt. Bei dieser Ausführung ist der in der Sitzlehne 3 angeordnete gasdichte, Behälter 8 mit dem Gurtaufrollautomaten mit dem Gurtstrammer 4 über einen Schlauch 12 mit einem Gurtschloß 13 verbunden. Dieses und die eingreifende Gurtzunge 14 sind als Einheit nach außen gasdicht abgeschlossen. Über die Gurtzunge 14 und den Schlauch 12 stehen sowohl der Beckengurt 10 als auch der Schultergurt 11 mit der Kapsel 8 in Verbindung und werden bei einer Aktivierung des Gurtstrammers 4 aufgeblasen.

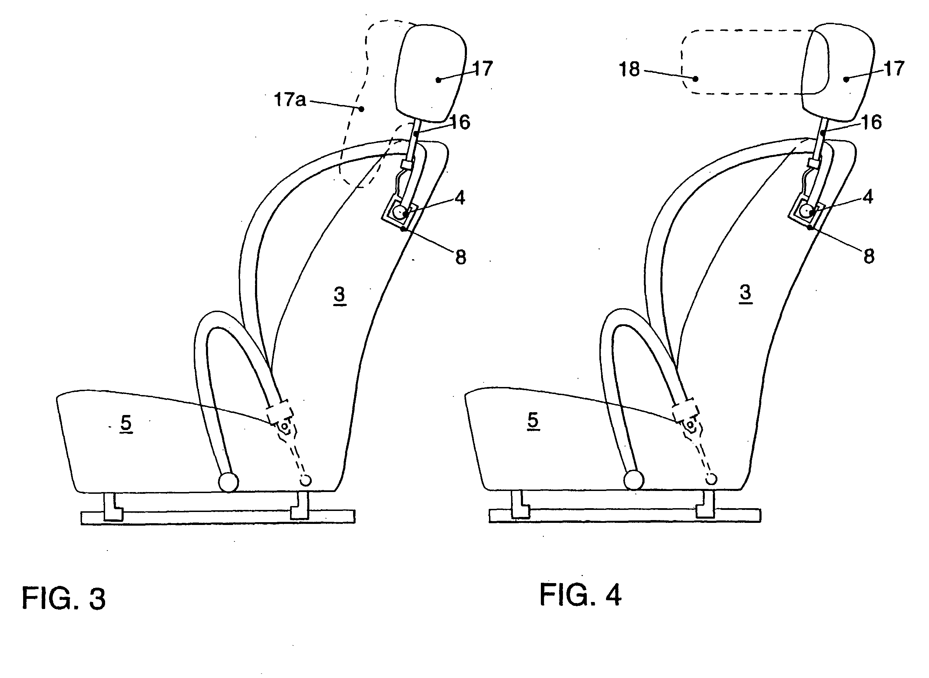

Der in Fig. 3 dargestellte Gurtintegralsitz weist einen nichtaufblasbaren zweiteiligen Sicherheitsgurt mit einem in der Sitzlehne 3 in einer gasdichten Kapsel 8 als Behälter angeordneten Gurtaufrollautomaten mit einem Gurtstrammer 4 auf. Der Behälter 8 ist über einen flexiblen Schlauch 15 mit dem freien Ende einer Kopfstützenstange 16 einer an der Sitzlehne 3 angeordneten und einen aufblasbaren Bereich 17a aufweisen Kopfstütze 17 verbunden. Bei einer Aktivierung des Treibsatzes für den Gurtstrammer 4 gelangt das Abgas über den Schlauch 15 und die Kopfstützenstange 16 in die Kopfstütze 17 und entfaltet den Bereich 17a.

Fig. 4 zeigt den gleichen Gurtintegralsitz mit der gleichen Sicherheitsgurtanordnung wie in Fig. 3. Im Unterschied zu dieser Ausführung ist seitlich an der Kopfstütze 17 ein Kopfairbag 18 für einen Seitenaufprall angeordnet, der über den Schlauch 15 und die Kopfstützenstange 16 aufblasbar ist.

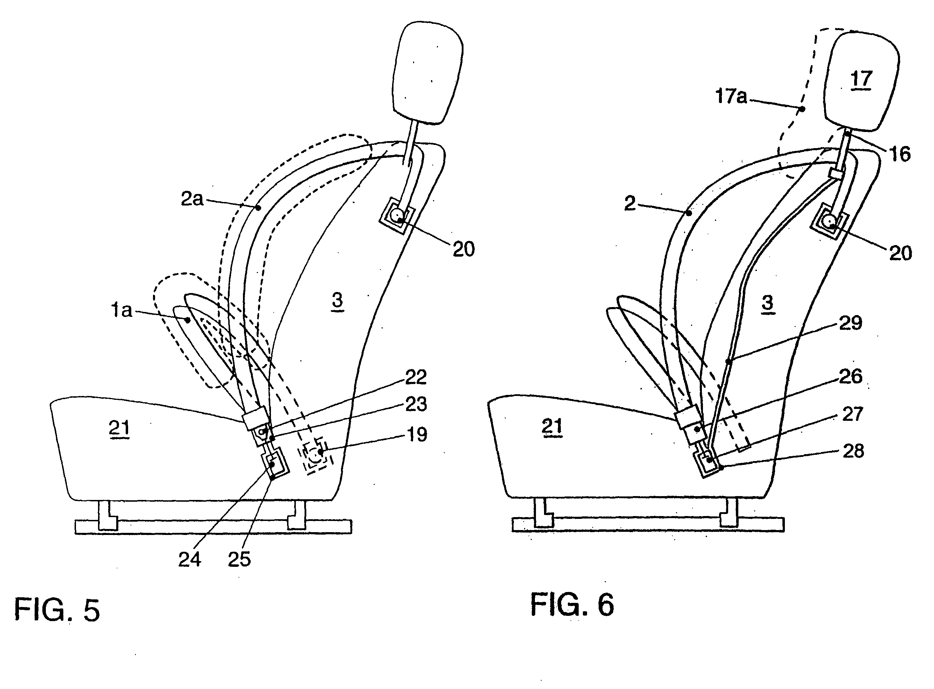

In der Ausführung gemäß Fig. 5 ist ein Sicherheitsgurt mit einem aufblasbaren Beckengurt 1a und einem aufblasbaren Schultergurt 2a dargestellt. Beide Gurte 1a und 2a sind mit einem separaten Gurtaufrollautomaten 19 und 20 versehen, von denen der Gurtaufrollautomat 19 des Beckengurtes 1a im Sitzteil 21 des Gurtintegralsitzes angeordnet ist. Es sei erwähnt, daß der Gurtaufrollautomat 20 für den Schultergurt 2a auch in der B-Säule angeordnet sein könnte. Das mit einer Gurtzunge 22 als gasdichte Einheit ausgeführte Gurtschloß 23 ist mit einem gekapselten Gurtstrammer 24 gekoppelt. Die Kapsel 25 als gasdichter Behälter für diesen ist mit dem Gurtschloß 23, und die Gurtzunge 24 ist mit dem Beckengurt 1a und mit dem Schultergurt 2a strömungsverbunden.

Eine weitere Ausführung zeigt Fig. 6. Dort weist der Schultergurt 2 einen Gurtaufrollautomaten 20 auf. Das Gurtschloß 26 ist mit einem Gurtstrammer 27 gekoppelt. Die diesen umgebende Kapsel 28 als gasdichter Behälter ist über einen flexiblen Schlauch 29 mit dem freien Ende der Kopfstützenstange 16 für einen entfaltbaren Bereich 17a der Kopfstütze 17 verbunden.

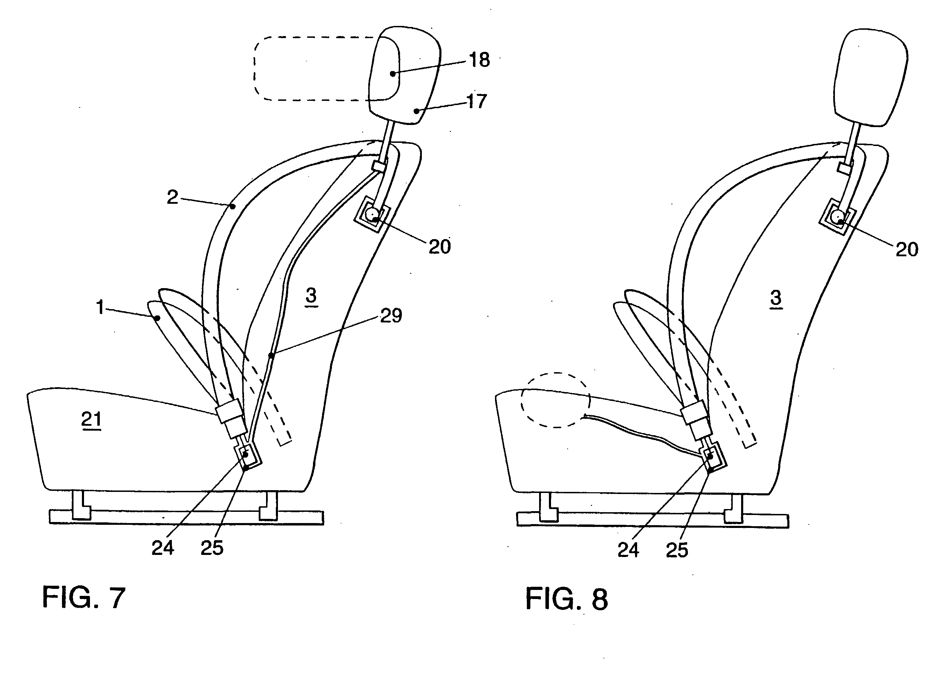

Die Ausführung gemäß Fig. 7 entspricht im wesentlichen der nach Fig. 6. Im Unterschied zu dieser ist die Kopfstütze 17 mit einem Kopfairbag 18 für einen Seitenaufprall versehen, der im Falle der Aktivierung des Gurtstrammertreibsatzes, wodurch sowohl der Beckengurt 1 als auch der Schultergurt 2 gestrafft werden, aufgeblasen wird. Auch bei dieser Ausführung könnte der Gurtaufrollautomat 20 für den Schultergurt 2 in der B-Säule des Fahrzeugs angeordnet sein.

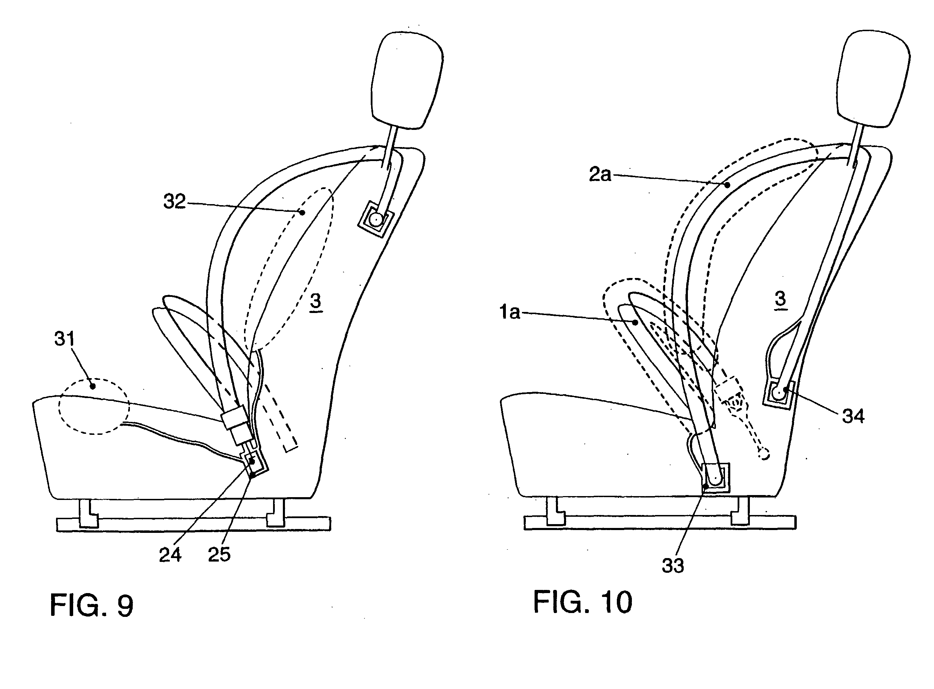

Auch die Fig. 8 und 9 zeigen Ausführungen mit der gleichen Sicherheitsgurtanordnung wie in den vorstehend beschriebenen Ausführungen nach Fig. 6 oder 7. Der Unterschied zu diesen besteht darin, daß entweder ein Sitzrampenairbag 30 (Fig. 8) oder aufblasbare Sitz- und Lehnenwangen 31, 32 (Fig. 9) an die Kapsel 25 angeschlossen sind. Auch eine Kombination von beiden Ausführungen ist möglich, wobei das bzw. die jeweiligen Rückhaltemittel in Abhängigkeit vom Aufpralltyp (Frontal- oder Seitenaufprall) aufgeblasen werden..

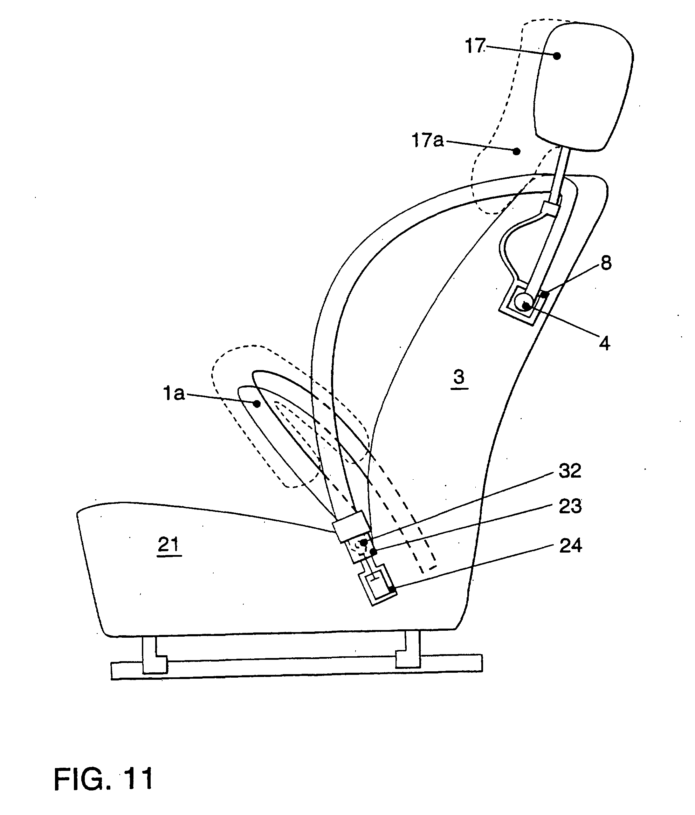

Bei der in Fig. 10 gezeigten Ausführung ist sowohl ein aufblasbarer Beckengurt 1a als auch ein aufblasbarer Schultergurt 2a mit einem separaten, gasdicht gekapselten Gurtaufrollautomaten mit Gurtstrammern 33 und 34 versehen und mit der jeweiligen Kapsel strömungsverbunden.
Schließlich ist in Fig. 11 eine Ausführung mit zwei Gurtstrammern gezeigt. Ein in der Sitzlehne 3 in einer gasdichten Kapsel 8 angeordneter Gurtaufrollautomat mit Gurtstrammer 4 speist dort einen an der Kopfstütze 17 angeordneten aufblasbaren Bereich 17a (Fig. 3), und die Kapsel 25 eines mit dem Gurtschloß 23 wirkverbundenen Gurtstrammers 24 (Fig. 5) ist über eine Gurtzunge 32 mit einem aufblasbaren Beckengurt 1a verbunden.

### BEZUGSZEICHENLISTE

- 1: Beckengurt
- 1a: aufblasbarer Beckengurt
- 2: Schultergurt
- 2a: aufblasbarer Schultergurt
- 3: Sitzlehne
- 4: Gurtstrammereinrichtung
- 5: Sitzgestell
- 6: Gurtschloß
- 7: Gurtendbeschlag
- 8: Kapsel
- 9: Schlauch
- 10: aufblasbarer Beckengurt
- 11: aufblasbarer Schultergurt
- 12: Schlauch
- 13: Gurtschloß
- 14: Gurtzunge
- 15: Schlauch
- 16: Kopfstützenstange
- 17a: aufblasbarer Bereich
- 17: Kopfstütze
- 18: Kopfairbag
- 19: Gurtaufrollautomat
- 20: Gurtaufrollautomat
- 21: Sitzteil
- 22: Gurtzunge
- 23: Gurtschloß
- 24: Gurtstrammereinrichtung
- 25: Kapsel
- 26: Gurtschloß
- 27: Gurtstrammereinrichtung
- 28: Kapsel
- 29: Schlauch
- 30: Sitzrampenairbag
- 31: aufblasbare Sitzwange
- 32: aufblasbare Lehnenwange
- 33: Gurtstrammereinrichtung
- 34: Gurtstrammereinrichtung

## Patentansprüche

1. Rückhaltesystem mit wenigstens einer Gurtstrammereinrichtung (4, 24, 27, 33, 34) für einen Sicherheitsgurt für einen Fahrzeuginsassen, bei dem wenigstens einer der Gurtanlenkpunkte oder -umlenkpunkte durch diese verlagerbar ist, mit wenigstens einer durch eine pyrotechnische Treibladung betätigbaren und mit dem Gurtanlenk- bzw. -umlenkpunkt wirkverbundenen Stelleinrichtung, und wobei das im aktivierten Zustand der Gurtstrammereinrichtung (4, 24, 27, 33, 34) freigesetzte Treibgas zur Aktivierung von wenigstens einem zusätzlichen aufblasbaren Rückhaltemittel (1a, 2a, 10, 11; 17a; 18; 30; 31, 32) nutzbar ist,
**dadurch gekennzeichnet,**
**dass** die Gurtstrammereinrichtung (4, 24, 27, 33, 34) in einem gasdichten Behälter (8, 25, 28) aus einem gasundurchlässigen, im wesentlichen unelastischen und druckfesten Material aufgenommen ist, der mit dem Rückhaltemittel (1a, 2a, 10, 11; 17a; 18; 30; 31, 32) strömungsverbunden ist dergestalt, dass die Treibgase zum Aufblasen des Rückhaltemittels (1a, 2a, 10, 11; 17a; 18; 30; 31, 32) vom gasdichten Behälter (8, 25, 28) aus in dieses einblasbar sind.

2. Rückhaltesystem nach Anspruch 1, **dadurch gekennzeichnet, daß** das Rückhaltemittel ein aufblasbarer Schulter- oder Beckengurt (1 a, 2a, 10, 11) ist.

3. Rückhaltesystem nach Anspruch 1, **dadurch gekennzeichnet, daß** das Rückhaltemittel eine aufblasbare Kopfstütze (17a) oder ein an der Kopfstütze angeordneter Kopfairbag (18) ist.

4. Rückhaltesystem nach Anspruch 1, **dadurch gekennzeichnet, daß** das Rückhaltemittel ein Sitzrampenairbag (30) und/ oder aufblasbare Sitz- und Lehnenwangen (31, 32) sind.

5. Rückhaltesystem nach Anspruch 1, **dadurch gekennzeichnet, daß** die Gurtstrammereinrichtung (4, 33, 34) in einen Gurtaufrollautomaten (4) integriert oder daß diese (24, 27) mit einem Gurtschloß (23, 26) wirkverbunden ist.

6. Rückhaltesystem nach Anspruch 5, **dadurch gekennzeichnet, daß** der mit der Gurtstrammereinrichtung (4, 33, 34) versehene Gurtaufrollautomat an einem Fahrersitz, insbesondere in der Sitzlehne (3) oder unter der Sitzfläche (21) angeordnet ist.

7. Rückhaltesystem nach Anspruch 5, **dadurch gekennzeichnet, daß** bei der Anordnung einer Gurtstrammereinnchtung (24, 27) an einem Gurtschloß (23, 26) der Gurtaufrollautomat (20) in der B-Säule integriert ist.

8. Rückhaltesystem nach einem der vorhergehenden Ansprüche, **dadurch gekennzeichnet, daß** das Rückhaltemittel (1 a, 17a, 18) über einen flexiblen Schlauch (9, 15, 29) mit dem Behälter (8, 24, 28) verbunden ist.

9. Rückhaltesystem nach einem oder mehreren der vorhergehenden Ansprüche, **dadurch gekennzeichnet, daß** der Behälter (8, 24, 28) aus einem im wesentlichen nicht dehnbaren Material, insbesondere einem engmaschig vernetzten Kunststoff besteht.

## Claims

1. Restraint system having at least one belt-tightener device (4, 24, 27, 33, 34) for a seat belt for a vehicle occupant, in which at least one of the belt articulation points or deflection points can be shifted by said belt-tightener device, having at least one adjusting device which can be actuated by a pyrotechnic propelling charge and is actively connected to the belt articulation or deflection point, and with it being possible for the propellant which is released in the activated state of the belt-tightener device (4, 24, 27, 33, 34) to be used for activating at least one additional, inflatable restraint means (1a, 2a, 10, 11; 17a; 18; 30; 31, 32), **characterized in that** the belt-tightener device (4, 24, 27, 33, 34) is accommodated in a gas-tight container (8, 25, 28) of a gas-impermeable, essentially inelastic and compression-resistant material which is connected in terms of flow to the restraint means (1a, 2a, 10, 11; 17a; 18; 30; 31, 32) in such a manner that the propellants for inflating the restraint means (1a, 2a, 10, 11; 17a; 18; 30; 31, 32) can be blown into the latter from the gas-tight container (8, 25, 28).

2. Restraint system according to Claim 1, **characterized in that** the restraint means is an inflatable shoulder or lap belt (1a, 2a, 10, 11).

3. Restraint system according to Claim 1, **characterized in that** the restraint means is an inflatable head restraint (17a) or a head airbag (18) arranged on the head restraint.

4. Restraint system according to Claim 1, **characterized in that** the restraint means is a seat ramp airbag (30) and/or inflatable seat and back rest cheeks (31, 32).

5. Restraint system according to Claim 1, **characterized in that** the belt-tightener device (4, 33, 34) is integrated in an automatic belt retractor (4) or **in that** the said device (24, 27) is actively connected to a belt buckle (23, 26).

6. Restraint system according to Claim 5, **characterized in that** the automatic belt retractor which is provided with the belt-tightener device (4, 33, 34) is arranged on a driver's seat, in particular in the seat back (3) or under the seat surface (21).

7. Restraint system according to Claim 5, **characterized in that**, when a belt-tightener device (24, 27) is arranged on a belt buckle (23, 26), the automatic belt retractor (20) is integrated in the B-pillar.

8. Restraint system according to one of the preceding claims, **characterized in that** the restraint means (1a, 17a, 18) is connected to the container (8, 24, 28) via a flexible tube (9, 15, 29).

9. Restraint system according to one or more of the preceding claims, **characterized in that** the container (8, 24, 28) consists of an essentially nonstretchable material, in particular a close-meshed crosslinked plastic.

## Revendications

1. Dispositif de retenue comportant au moins un système tendeur de ceinture (4, 24, 27, 33, 34) pour une ceinture de sécurité pour un occupant de véhicule, avec lequel au moins l'un des points d'articulation ou de renvoi de la ceinture peut être décalé par celui-ci, comprenant au moins un dispositif de positionnement actionnable par une charge propulsive pyrotechnique et en liaison active avec le point d'articulation ou de renvoi de la ceinture, et avec lequel le gaz propulseur libéré dans l'état activé du système tendeur de ceinture (4, 24, 27, 33, 34) peut être utilisé pour activer au moins un moyen de retenue gonflable supplémentaire (1a, 2a, 10, 11 ; 17a ; 18 ; 30 ; 31, 32), **caractérisé en ce que** le système tendeur de ceinture (4, 24, 27, 33, 34) est logé dans un récipient hermétique au gaz (8, 25, 28) en un matériau imperméable au gaz, pour l'essentiel non élastique et résistant à la pression, lequel présente une liaison d'écoulement avec le moyen de retenue (1a, 2a, 10, 11 ; 17a ; 18 ; 30 ; 31, 32) de telle manière que les gaz propulseurs destinés à faire gonfler le moyen de retenue (1a, 2a, 10, 11 ; 17a ; 18 ; 30 ; 31, 32) peuvent y être injectés à partir du récipient hermétique au gaz (8, 25, 28).

2. Dispositif de retenue selon la revendication 1, **caractérisé en ce que** le moyen de retenue est une ceinture d'épaules ou une ceinture ventrale (1a, 2a, 10, 11) gonflable.

3. Dispositif de retenue selon la revendication 1, **caractérisé en ce que** le moyen de retenue est un appuie-tête gonflable (17a) ou un coussin gonflable de sécurité pour tête (18) monté sur l'appuie-tête.

4. Dispositif de retenue selon la revendication 1, **caractérisé en ce que** le moyen de retenue est un coussin gonflable de sécurité pour rampe de siège (30) et/ou des faces de siège et de dossier gonflables (31, 32).

5. Dispositif de retenue selon la revendication 1, **caractérisé en ce que** le système tendeur de ceinture (4, 33, 34) est intégré dans un enrouleur automatique de ceinture (4) ou que celui-ci (24, 27) est en liaison active avec un fermoir de ceinture (23, 26).

6. Dispositif de retenue selon la revendication 5, **caractérisé en ce que** l'enrouleur automatique de ceinture muni du système tendeur de ceinture (4, 33, 34) est monté sur un siège de conducteur, notamment dans le dossier du siège (3) ou sous l'assise (21).

7. Dispositif de retenue selon la revendication 5, **caractérisé en ce que** lorsqu'un système tendeur de ceinture (24, 27) est monté sur un fermoir de ceinture (23, 26), l'enrouleur automatique de ceinture (20) est intégré dans la colonne B.

8. Dispositif de retenue selon l'une des revendications précédentes, **caractérisé en ce que** le moyen de retenue (1a, 17a, 18) est en liaison avec le récipient (8, 24, 28) par le biais d'un tuyau flexible (9, 15, 29).

9. Dispositif de retenue selon une ou plusieurs des revendications précédentes, **caractérisé en ce que** le récipient (8, 24, 28) se compose d'un matériau pour l'essentiel non extensible, notamment une matière plastique tressée à mailles serrées.
